# DEMANDE DE BREVET EUROPEEN

(11) **EP 4 379 352 A1**
(43) Date de publication de la demande: **05.06.2024**
(21) Numéro de dépôt: 23212493.3
(22) Date de dépôt: 28.11.2023
(51) Int. Cl.: G01N 21/17, G01N 29/24

(54) **SYSTÈME PHOTOACOUSTIQUE ET PROCÉDÉ ASSOCIÉ**

(30) Priorité: 29.11.2022 FR 2212507
(71) Demandeur: COMMISSARIAT À L'ÉNERGIE ATOMIQUE ET AUX ÉNERGIES ALTERNATIVES, 75015 Paris (FR)
(72) Inventeur: BEN BAKIR, Badhise, 38054 Grenoble Cedex 09 (FR); LARTIGUE, Olivier, 38054 Grenoble Cedex 09 (FR); CONSTANCIAS, Christophe, 38054 Grenoble Cedex 09 (FR)
(74) Mandataire: Cabinet Camus Lebkiri

(57) **Abrégé**

L'invention concerne un système (1) photoacoustique comprenant :
- un substrat (2) semiconducteur comprenant un volume creux (21a) et une fenêtre (22) s'étendant à l'aplomb d'une partie du volume creux (21a) ; et
- un dispositif (3) à émission de surface comprenant un guide d'onde (31) et un réseau de diffraction (32), le guide d'onde (31) présentant une face supérieure (31a) et une face inférieure (31b), la face inférieure (31b) étant disposé sur la fenêtre (22), le réseau de diffraction (32) étant disposé sur la face supérieure (31a) ou sur la face inférieure (31b).

## Description

### DOMAINE TECHNIQUE DE INVENTION

Le domaine technique de l'invention est celui des systèmes photoacoustiques, par exemple, mis en oeuvre dans la détection de composés chimiques dans un gaz ou dans un échantillon de peau vascularisé.

### ARRIÈRE-PLAN TECHNOLOGIQUE DE L'INVENTION

Les systèmes de détection photoacoustiques permettent de détecter et quantifier des espèces cibles présentes dans un milieu continu tel qu'un gaz ou un liquide. Les systèmes de détection photoacoustiques s'appuient sur l'émission d'une onde acoustique dans le milieu continu en réponse à une excitation sélective d'atomes cibles ou de molécules cibles dans ce milieu continu au moyen d'un faisceau lumineux. L'onde acoustique, captée par un microphone est proportionnelle à la densité d'atomes cibles ou de molécules cibles dans le milieu continu.

Le principe de la photoacoustique est connu depuis plusieurs décennies mais la réalisation d'un système de détecteur photoacoustique qui puisse être miniaturisé et précis soulève toujours de nombreux problèmes techniques.

Dans cette optique, le document [« Downsizing and Silicon Intégration of Photoacoustic Gas Cells » Glière & al., International Journal of Thermophysics (2020) 41:16] divulgue un système de détection comprenant un volume destiné à accueillir le milieu continu. Le système divulgué est toutefois remarquable en ce que le volume est restreint. En effet, le signal photoacoustique est inversement proportionnel au volume du milieu continu dans lequel se propage l'onde acoustique. Une façon directe d'améliorer la résolution d'un système de détection consiste donc à réduire le volume en jeu, idéalement dans la limite de quelques micromètres cubes pour une mesure à pression atmosphérique (sinon le volume est trop faible que la probabilité d'interaction d'un photon avec une molécule de gaz soit suffisante). Le système divulgué tire parti de méthodes de fabrication de dispositifs en Si, qui permettent de former de très petits volumes creux à l'intérieur même d'un substrat de silicium. Il est notamment divulgué de graver un réseau de tranchées à la surface de deux substrats distincts. Les deux substrats sont ensuite collés l'un à l'autre de sorte que les réseaux de tranchés soient en regard. Les deux substrats distincts forment ainsi un substrat épais et les deux réseaux de tranchés forment un volume creux dans le volume du substrat épais, sous les surfaces dudit substrat épais. Le volume creux divulgué comprend une cavité principale, rectiligne, et une fenêtre transparente disposée sur une tranche du substrat épais. Un faisceau lumineux aligné avec la fenêtre (on parle alors d'aboutement), peut alors entrer dans la cavité principale et interagir avec le milieu présent dans la cavité. Ainsi, un faisceau laser correctement aligné avec la première cavité peut interagir avec le milieu continu présent dans la cavité principale et induire une réponse photoacoustique dans le milieu.

Toutefois, cette géométrie pose de nouveaux problèmes. En effet, la réponse du système de détection est très sensible au désalignement ou à la divergence angulaire du faisceau laser avec ladite cavité principale. Dans un environnement de laboratoire, il est possible de mettre en oeuvre un dispositif d'alignement actif du faisceau ainsi qu'un système de collimation performant. Toutefois sa mise en oeuvre est complexe et ne répond pas aux besoins de miniaturisation ou d'intégration dans un laboratoire sur puce (dit « lab on chip » en anglais). L'intégration d'une source laser non-collimatée (telle qu'une diode laser) à proximité de la fenêtre optique rend possible l'intégration dans un laboratoire sur puce. En revanche, elle requiert une source laser de forte amplitude pour compenser le faible couplage avec la cavité et/ou sa forte divergence angulaire. De plus, un mauvais contrôle de l'alignement du faisceau avec la cavité ou un mauvais contrôle de l'éloignement de la source par rapport à la fenêtre optique induit une forte dispersion de résolution entre plusieurs systèmes de détection du même type.

Il existe donc un besoin de fournir un système photoacoustique qui soit performant, reproductible et qui puisse être intégré dans un laboratoire sur puce.

### RÉSUMÉ DE L'INVENTION

Dans cette optique, l'invention concerne un système photoacoustique comprenant : un substrat semiconducteur, le substrat semiconducteur comprenant :
- une face dite « face supérieure » ; et
- une paroi interne délimitant un volume creux, le volume creux s'étendant dans le substrat semiconducteur à distance de la face supérieure dudit substrat semiconducteur.

Le système photoacoustique étant remarquable en ce que :
- le substrat semiconducteur comprend au moins une portion, dite « fenêtre », transparente à un champ électromagnétique, s'étendant à l'aplomb d'au moins une partie du volume creux et depuis la face supérieure du substrat semiconducteur jusqu'au volume creux ; et en ce que
- le système photoacoustique comprend au moins un dispositif à émission de surface comprenant une face émettrice, ladite face émettrice s'étendant sur ladite au moins une fenêtre, ledit au moins un dispositif comprenant :
   - un guide d'onde comprenant une première face et une deuxième face, opposée à la première face, le guide d'onde comprenant une région active configurée pour émettre le champ électromagnétique ; et
   - un réseau de diffraction présentant, selon une première direction parallèle à la face émettrice, un ordre de diffraction supérieur ou égal à deux,
   - ledit réseau de diffraction s'étendant sur la première face du guide d'onde, la face émettrice coïncidant avec la deuxième face du guide d'onde ; ou ledit réseau de diffraction s'étendant sur la deuxième face du guide d'onde, la face émettrice coïncidant avec le réseau de diffraction.

Par transparent au champ électromagnétique, on entend que la fenêtre présente un coefficient de transmission supérieure à 50 %, autrement dit, au moins 50 % de la puissance véhiculée par le champ électromagnétique est transmise par la fenêtre.

Le fait que le réseau de diffraction présente un ordre de diffraction supérieur ou égal à deux permet d'extraire le champ électromagnétique généré par la région active. Le réseau de diffraction permet notamment à une composante du champ de se propager hors du plan. Une part substantielle de la puissance véhiculée par la composante hors plan (que nous appellerons rayonnement électromagnétique) est alors émise par la deuxième face du guide d'onde.

Grâce à la fenêtre du substrat semiconducteur et à la disposition du dispositif à émission de surface, le rayonnement électromagnétique, issu du dispositif à émission de surface, est injecté directement dans le volume creux. Il peut donc être mis en oeuvre pour réaliser une mesure photoacoustique. Un dispositif à émission de surface émet un rayonnement électromagnétique qui montre une bonne homogénéité en champ proche et une faible dispersion angulaire. Dès lors, un milieu continu dans le volume creux à l'aplomb du dispositif à émission de surface (et plus particulièrement à l'aplomb de la fenêtre) peut être excité efficacement par le rayonnement issu du dispositif à émission de surface. De plus, l'épaisseur restreinte de la fenêtre permet également de réduire l'absorption du rayonnement. Enfin, le dispositif à émission de surface peut être disposé au plus près de la fenêtre (voire sur la fenêtre) et donc au plus près du volume creux, de manière à illuminer efficacement un milieu qui se trouverait dans le volume creux. Le système photoacoustique selon l'invention est donc performant.

Le fait que le dispositif à émission de surface s'étende sur la face supérieure du substrat et pas à proximité d'une tranche du substrat simplifie également son intégration dans le système photoacoustique. Il suffit de le déposer (ou le fabriquer) sur la fenêtre. De plus les sources d'incertitudes concernant l'alignement sont faibles. En effet, le dispositif à émission de surface étant déposé sur la face supérieure (ou sur une semelle optique qui est elle-même déposée sur la face supérieure), l'incertitude sur son éloignement ou son inclinaison par rapport à la face supérieure est faible voire négligeable. De plus, une rotation du dispositif selon un axe perpendiculaire à la fenêtre n'entraîne pas nécessairement d'effet. La contrainte d'alignement est donc relâchée par rapport à un système selon l'art antérieur. De plus, la fenêtre peut être élargie autant que nécessaire pour absorber une erreur d'alignement du dispositif par rapport à cette dernière. Les résultats de mesure ou de détection que l'on peut obtenir avec plusieurs systèmes photoacoustiques selon l'invention sont donc reproductibles.

Le dispositif à émission de surface peut présenter des dimensions réduites, ce qui en fait un bon candidat pour une intégration dans un laboratoire sur puce. De plus, les dimensions, latérales notamment, du dispositif à émission de surface peuvent être réduite autant que nécessaire, pour réduire davantage sa taille et la taille du système photoacoustique. Rappelons que la précision de mesure augmente avec la réduction du volume excité. Le système photoacoustique selon l'invention est donc aisément intégrable, par exemple dans un laboratoire sur puce.

Avantageusement, le réseau de diffraction dudit au moins un dispositif s'étend sur la première face du guide d'onde dudit au moins un dispositif et ledit réseau de diffraction est réfléchissant.

Avantageusement, le réseau de diffraction dudit au moins un dispositif comprend une structure périodique et une couche métallique, la structure périodique s'étendant sur la première face du guide d'onde et la couche métallique s'étendant sur la structure périodique.

Alternativement, le réseau de diffraction dudit au moins un dispositif s'étend sur la deuxième face du guide d'onde dudit au moins un dispositif et ledit réseau de diffraction est non-réfléchissant.

Avantageusement, la structure périodique du réseau de diffraction dudit au moins un dispositif comprend une alternance de premières portions et de deuxièmes portions, les premières portions étant constituées d'un premier matériau semiconducteur présentant un premier indice optique et les deuxièmes portions étant constituées d'un métal ou d'un deuxième matériau, tel qu'un autre matériau semiconducteur ou un gaz, présentant un deuxième indice optique différent du premier indice optique.

Avantageusement, le réseau de diffraction dudit au moins un dispositif s'étend à l'aplomb de la région active du guide d'onde dudit au moins un dispositif, la région active présentant une longueur, mesurée selon la première direction, et le réseau de diffraction dudit au moins un dispositif présentant une longueur, également mesurée selon la première direction, la longueur dudit réseau de diffraction étant sensiblement égale à la longueur de ladite région active, ledit réseau présentant, selon la première direction, un ordre de diffraction unique.

Préférentiellement, le réseau de diffraction dudit au moins un dispositif présente, selon la première direction, un ordre de diffraction supérieur ou égal à trois.

Avantageusement, la région active dudit au moins un dispositif présente une largeur, mesurée selon une deuxième direction, parallèle à la face émettrice dudit au moins un dispositif et perpendiculaire à la première direction, et le réseau de diffraction dudit au moins un dispositif présente une largeur, mesurée selon la deuxième direction, la largeur dudit réseau de diffraction étant sensiblement égale à la largeur de ladite région active, ledit réseau de diffraction présentant, selon la deuxième direction, un autre ordre de diffraction, unique et supérieur ou égal à deux.

Avantageusement, le guide d'onde dudit au moins un dispositif est délimité par un premier flanc et un deuxième flanc, le deuxième flanc étant opposé au premier flanc, les premier et deuxième flancs étant sensiblement perpendiculaires à la deuxième face, ledit dispositif comprenant également une première couche conductrice et une deuxième couche conductrice, la première couches conductrice s'étendant sur le première flanc et la deuxième couche conductrice s'étendant sur le deuxième flanc.

Avantageusement, ledit au moins un dispositif à émission de surface est collé sur la fenêtre et préférentiellement par collage moléculaire ou au moyen d'une colle polymérisable.

Avantageusement, ledit au moins un dispositif à émission de surface est configuré pour émettre le rayonnement électromagnétique infra-rouge par sa face émettrice avec un angle, mesuré par rapport à la normale de ladite face émettrice, compris entre 0° et 60°.

Avantageusement, le substrat semiconducteur comprend une pluralité de fenêtres et le système photoacoustique comprend une pluralité de dispositifs à émission de surface, chaque dispositif à émission de surface de la pluralité de dispositifs à émission de surface étant disposé sur une fenêtre de la pluralité de fenêtres.

Avantageusement, le rayonnement électromagnétique comprend une longueur d'onde comprise dans [0,8 µm ; 20 µm] et préférentiellement dans [4 µm ; 12 µm].

Avantageusement, le système photoacoustique comprend un régulateur thermique configuré pour réguler la température dudit au moins un dispositif à émission de surface.

Préférentiellement, le régulateur thermique configuré pour réguler la température dudit au moins un dispositif à émission de surface lorsque ledit au moins un dispositif à émission de surface fonctionne en un régime stationnaire.

Préférentiellement, le régulateur thermique est configuré pour réguler la température dudit au moins un dispositif à émission de surface à 0,1 °C près.

Alternativement, le régulateur thermique est configuré pour réguler la variation temporelle de la température dudit au moins un dispositif à émission de surface à moins de 0,1 °C/s près.

L'invention concerne également un procédé de fabrication d'un système photoacoustique comprenant, à partir d'un substrat semiconducteur comprenant une face dite « face supérieure » :
- former une paroi interne délimitant un volume creux, le volume creux s'étendant dans le substrat semiconducteur à distance de la face supérieure dudit substrat semiconducteur de sorte que le substrat semiconducteur comprenne au moins une portion, dite « fenêtre », transparente à un champ électromagnétique, s'étendant à l'aplomb d'au moins une partie du volume creux et depuis la face supérieure du substrat semiconducteur jusqu'au volume creux ;
- fabriquer au moins un dispositif à émission de surface s'étendant sur la fenêtre, ledit au moins un dispositif comprenant :
   - un guide d'onde comprenant une première face et une deuxième face, opposée à la première face, la deuxième face reposant sur ladite au moins une fenêtre, le guide d'onde comprenant une région active parallèle à la deuxième face configurée pour émettre le champ électromagnétique ; et
   - un réseau de diffraction présentant un ordre de diffraction supérieure ou égal à deux et s'étendant sur la première face du guide d'onde ou sur la deuxième face du guide d'onde.

Avantageusement, la fabrication dudit au moins un dispositif à émission de surface comprend :
- former le guide d'onde dudit au moins un dispositif sur ladite au moins une fenêtre du substrat semiconducteur ; et
- former le réseau de diffraction dudit au moins un dispositif sur la première face dudit guide d'onde.

Alternativement, la fabrication dudit au moins un dispositif à émission de surface comprend :
- former le réseau de diffraction dudit au moins un dispositif sur ladite au moins une fenêtre du substrat semiconducteur ; et
- former le guide d'onde dudit au moins un dispositif sur ledit réseau de diffraction.

L'invention et ses différentes applications seront mieux comprises à la lecture de la description qui suit et à l'examen des figures qui l'accompagnent.

### BRÈVE DESCRIPTION DES FIGURES

Les figures sont présentées à titre indicatif et nullement limitatif de l'invention. Sauf précision contraire, un même élément apparaissant sur des figures différentes présente une référence unique.

Les [Fig. 1a], [Fig. 1b], [Fig. 3a], [Fig. 3b], [Fig. 4], [Fig. 5] et [Fig. 6] montrent schématiquement des premier, deuxième, troisième, quatrième et cinquième modes de réalisation d'un système photoacoustique selon l'invention.

La [Fig. 2] montre schématiquement un mode de réalisation d'un dispositif à émission de surface pouvant être mis en oeuvre dans le système photoacoustique selon l'invention.

Les [Fig. 7a] et [Fig. 7b] montrent schématiquement deux modes de mise en oeuvre d'un procédé de fabrication d'un système photoacoustique selon l'invention.

### DESCRIPTION DÉTAILLÉE

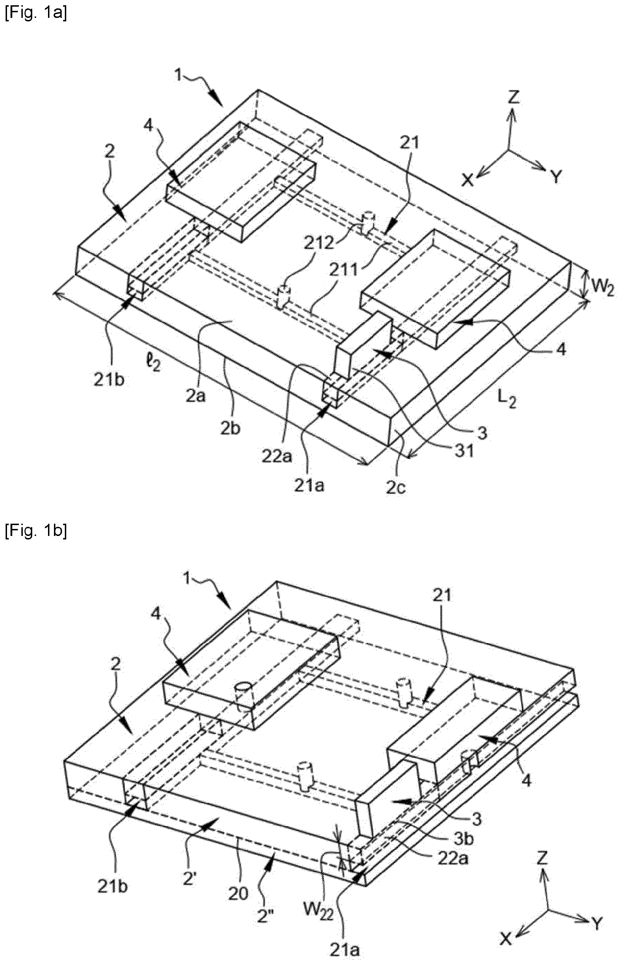

Les [Fig. 1a] et [Fig. 1b] montrent schématiquement un mode de réalisation d'un système 1 photoacoustique selon l'invention. Dans ce mode de réalisation, le système 1 est adapté pour réaliser une mesure d'une concentration d'une espèce ciblée dans un gaz. Le système 1 est basé sur la mesure d'une onde sonore résultant de l'émission photoacoustique par l'espèce ciblée dans le gaz.

Le système 1 comprend notamment un dispositif 3 à émission de surface, deux capteurs sonores 4 (autrement dit des microphones) et un résonateur de Helmholtz 21 dans lequel peut être introduit le gaz comprenant l'espèce ciblée. Le dispositif 3 à émission de surface est couplé au résonateur de Helmholtz de manière à injecter un rayonnement électromagnétique qui puisse exciter l'espèce ciblée dans le gaz. Les capteurs sonores 4 sont couplés au résonateur 21 afin de mesurer l'amplitude des ondes sonores se propageant dans le résonateur 21 et résultant de l'émission photoacoustique par l'espèce ciblée.

Le système 1 illustré dans les [Fig. 1a] et [Fig. 1b] est partiellement tronqué, selon deux configurations différentes, pour montrer les éléments du système 1.

Le système 1 tel qu'illustré comprend un substrat 2 semiconducteur comprenant le résonateur 21. Le substrat 2 s'étend dans un plan {X ; Y} formé par une première direction X et une deuxième direction Y, orthogonale à la première direction X. Le substrat 2 comprend deux grandes faces 2a, 2b, opposées l'une à l'autre. C'est-à-dire une face 2a dite « face supérieure », orientée selon une troisième direction Z, et une face 2b dite « face inférieure », orientée selon la troisième direction -Z et opposée à la face supérieure 2a. Les deux grandes faces 2a, 2b sont délimitées par un flanc 2c (également appelé « bord »), formant le pourtour du substrat 2.

Le substrat 2 peut présenter une épaisseur W₂, mesurée selon la direction Z, comprise dans [0,5 mm ; 3 mm]. Le substrat 2 peut présenter une longueur *L*₂ et une largeur *l*₂, respectivement mesurées selon les première et deuxième directions X et Y, comprises dans [5 mm ; 20 mm].

Le résonateur 21 comprend deux volumes creux 21a, 21b que l'on appellera également « cavités principales ». Les cavités principales 21a, 21b s'étendent parallèlement l'une par rapport à l'autre selon X. Elles s'étendent dans le volume du substrat 2, sous la face supérieure 2a du substrat 2. Autrement dit, elles s'étendent à distance de la face supérieure 2a. Chacune des cavités principales 21a, 21b est délimitée par une paroi interne dans le substrat 2. Le résonateur 12 comprend également des canaux 211 reliant les cavités principales 21a, 21b. Les canaux 211 illustrés présentent chacun une ouverture 212, pratiquée dans la face supérieure 2a du substrat 2. Ces ouvertures 212 peuvent servir à introduire le gaz et l'espèce ciblée dans le résonateur 21.

Le substrat 2 semiconducteur peut être formé à partir de deux substrats 2', 2" semiconducteurs fins assemblés. Une ligne 20 illustre par exemple l'interface entre les deux substrats 2', 2" fins assemblés. Pour former le substrat épais 2, chacun des substrats 2', 2" fins est gravé de manière à former des tranchées qui composeront le résonateur 21. L'assemblage des deux substrats 2', 2" l'un contre l'autre, de sorte que leurs tranchées respectives soient en regard, forme le substrat 2 et le résonateur 21.

Le substrat 2 est préférentiellement en Si.

Le substrat 2 comprend une portion 22 dite « fenêtre ». Par fenêtre, on entend qu'elle est adaptée pour transmettre un rayonnement électromagnétique dans le résonateur 21 et en particulier dans une des cavités principales 21a, 21b. La fenêtre 22 s'étend à l'aplomb d'au moins une partie d'une des cavités principales 21a, 21b. Par s'étendre à l'aplomb, on entend que la fenêtre est alignée avec une portion d'une cavité 21a, 21b selon la direction Z (perpendiculaire à la face supérieure 2a). La fenêtre 22 s'étend dans le substrat 2 et relie la surface supérieure 2a du substrat 2 jusqu'à l'une des cavités 21a, 21b. La fenêtre 22 n'est donc pas une ouverture pratiquée dans le substrat 2 de manière à mettre à jour une cavité 21a, 22b. La fenêtre 22 peut être dans le même matériau que le substrat 2, par exemple en Si. Le coefficient de transmission de la fenêtre 22 peut varier en fonction de l'épaisseur W₂₂ de la fenêtre 22, mesurée selon la direction Z. On peut considérer qu'une fenêtre 22 en Si est transparente à un rayonnement infrarouge dans une gamme [0,8 µm ; 20 µm] lorsque son épaisseur W₂₂ est inférieure ou égale à 100 µm. Une épaisseur de fenêtre W₂₂ inférieure, par exemple inférieure ou égale à 50 µm, pourra être privilégiée pour améliorer davantage la transmission du rayonnement infrarouge. La fenêtre peut également être réalisée dans un autre matériau, notamment lorsque celui-ci présente une meilleure transmission du rayonnement électromagnétique pour certaines longueurs d'onde. Par exemple, il peut s'agir d'une portion en nitrure de silicium ou en carbure de silicium.

Dans le mode de réalisation des [Fig. 1a] et [Fig. 1b], la fenêtre 22 est associée à une cavité 21a du résonateur 21. Dans un développement, le substrat 2 peut comprendre une pluralité de fenêtres associées à une cavité. Par exemple, les fenêtres s'étendent de la face supérieure 2a du substrat 2 jusqu'à une même cavité 21a, mais à des portions de ladite cavité 21a différentes. Ainsi, le système 1 peut comprendre plusieurs dispositifs 3 à émission de surface, chacun étant disposé sur une des fenêtres. Ainsi, la pluralité de dispositifs est couplée à une même cavité. Ceci peut être utile pour exposer une même cavité à des rayonnements présentant des longueurs d'onde différentes (par exemple pour détecter des espèce différentes).

Le dispositif 3 à émission de surface permet d'injecter un rayonnement électromagnétique dans le résonateur 21 et en particulier dans la cavité principale 21a, 21b à laquelle est associée la fenêtre 22.

Par dispositif à émission de surface, on entend un dispositif électro-optique configuré pour émettre un rayonnement électromagnétique par l'une de ses faces, que l'on nomme généralement « face émettrice ». Il se différencie d'un dispositif à émission de bord pour lequel l'émission d'un rayonnement électromagnétique est réalisée au niveau d'un bord ou d'un flanc dudit dispositif.

L'intérêt d'un dispositif 3 à émission de surface est double. Dans un premier temps, il est possible d'émettre un rayonnement selon une direction hors plan. C'est-à-dire, dans le cas des [Fig. 1a] et [Fig. 1b], hors du plan {X ; Y}. Par exemple selon la direction Z. Le dispositif 3 permet également d'émettre un rayonnement par une surface (la face dite « émettrice ») qui présente une aire plus grande qu'un bord. La face émettrice présente généralement une aire conséquente et permet d'obtenir un rayonnement électromagnétique homogène spatialement, surtout en champ proche. Il est donc avantageux de recourir à ce type de dispositif pour injecter un rayonnement électromagnétique dans le résonateur 21 et exciter efficacement l'espèce ciblée dans le gaz.

Le dispositif 3 est configuré pour émettre par une face 3b que l'on nommera « face émettrice ». Le rayonnement électromagnétique issu de la face émettrice 3b est sensiblement perpendiculaire à la face émettrice 3b. Par sensiblement perpendiculaire, on entend que le rayonnement présente, avec la face émettrice 3b, un angle supérieur ou égal à 30° (c'est-à-dire compris entre 30° et 90°).

Afin de réaliser l'injection du rayonnement électromagnétique dans le résonateur 21 et en particulier dans la cavité 21a, le dispositif 3 à émission de surface est disposé sur la fenêtre 22. La face émettrice 3b du dispositif 3 à émission de surface est disposée directement au contact de la fenêtre 22a. De la sorte, le rayonnement électromagnétique émis par le dispositif 3 est directement transmis vers la cavité 21a. Le rayonnement émis peut alors exciter l'espèce ciblée présent dans le résonateur 21.

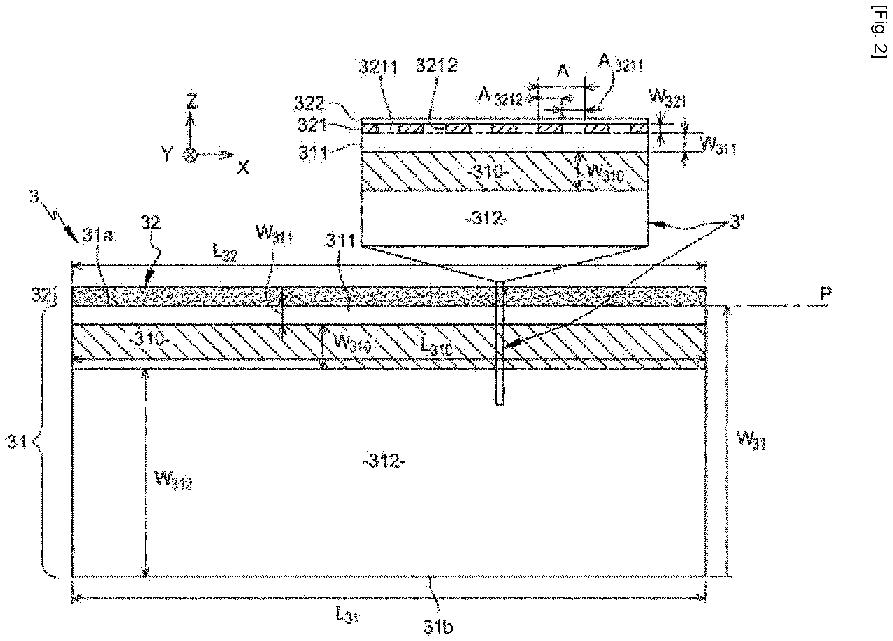

La [Fig. 2] présente, selon une vue en coupe, un mode de réalisation d'un dispositif 3 à émission de surface pouvant être mis en oeuvre dans le système photoacoustique 1. Le dispositif 3 est représenté selon une coupe dans le plan {X ; Z}. La [Fig. 2] présente également un grossissement d'une portion 3' dudit dispositif 3, dans le même plan.

Le dispositif 3 comprend : un guide d'onde 31 et un réseau de diffraction 32.

Le guide d'onde 31 s'étend dans un plan P qui est par exemple parallèle à la surface supérieure 2a du système 1 (c'est-à-dire le plan {X ; Y}). Le guide d'onde 31 comprend une première face 31a et une deuxième face 31b, opposée à la première face 31b. Les premières et deuxième faces 31a, 31b s'étendent parallèlement au plan P. La première face 31a est par exemple orientée selon la troisième direction Z, perpendiculaire au plan P, et la deuxième face 31b est orientée selon la même direction mais dans un sens opposé.

Le guide d'onde 31 comprend également une région active 310. La région active 310 est une portion du guide d'onde 31 configurée pour émettre un champ électromagnétique (appelé également « rayonnement électromagnétique » ou simplement « champ » ou « rayonnement »). La région active 310 est par exemple configurée pour que l'émission soit spontanée et/ou stimulée. Dans ce dernier cas, la région active pourrait également être appelée « milieu amplificateur » car elle peut permettre au dispositif 3 de fonctionner en mode laser. La région active 310 est par exemple un empilement de sous-couches, telles que [InGaAs/AlInAs]×N, où N est le nombre de paires de sous-couches InGaAS/AlInAs, par exemple égal à cent. De la sorte, la région active 310 est configurée pour réaliser une émission spontanée et stimulée.

La région active peut présenter une épaisseur W₃₁₀, mesurée perpendiculairement au plan P, pouvant être comprise entre 1 µm et 5 µm et préférentiellement entre 1,5 µm et 2,5 µm.

La région active 310 est préférentiellement encadrée par deux couches semiconductrices 311, 312, s'étendant parallèlement au plan P. Une première couche semiconductrice 311, qui peut être appelée « revêtement supérieur » ou plus communément appelé « top cladding » en anglais, s'étend sur la région active 310 et préférentiellement directement contre la région active 310. Dans ce mode de réalisation, la face du revêtement supérieur 311 qui est opposée à la région active 310 est alors avantageusement la première face 31a. Une deuxième couche semiconductrice 312, qui peut être appelée « revêtement inférieur » ou « bottom cladding » en anglais, s'étend également sur la région active 310 et préférentiellement contre la région active 310. La face du revêtement inférieur 312 qui est opposée à la région active 310 est alors avantageusement la deuxième face 31b.

Les revêtements supérieur et inférieur 311, 312 peuvent permettre le guidage du champ dans le guide d'onde 31. Pour cela, ils présentent avantageusement des indices optiques (également appelés indices de réfraction) strictement inférieurs à l'indice optique moyen de la région active 310.

Le revêtement supérieur 311 présente une épaisseur, mesurée perpendiculairement au plan P, pouvant être comprise entre 1 µm et 2 µm. Le revêtement inférieur 312 présente une épaisseur, mesurée perpendiculairement au plan P, pouvant être comprise entre 2 µm et 100 µm et préférentiellement entre 2 µm et 40 µm.

Le revêtement inférieur 312 est par exemple une hétérostructure semiconductrice de type III-V, c'est-à-dire des matériaux rangés dans les groupes III B et V B du tableau périodique des éléments (qui, selon une autre convention, correspond aux colonnes 13 et 15 du tableau périodique des éléments). Ledit revêtement 312 est par exemple formé à partir de InP. Le revêtement inférieur 312 peut également être dopé, par exemple de type n, c'est-à-dire avec des impuretés jouant le rôle de donneurs électronique. Le revêtement inférieur 312 est par exemple dopé à partir de S.

Le revêtement supérieur 311 peut être, de la même façon que le revêtement inférieur 312, une hétérostructure semiconductrice de type III-V, telle que le InP. De la même façon, le revêtement supérieur 311 peut être dopé, par exemple de type n.

Dans le mode de réalisation de la [Fig. 2], le guide d'onde 31 est donc un empilement de couches 310, 311, 312 s'étendant parallèlement au plan P. Il peut présenter une forme de parallélépipède rectangle délimité des flancs. Il présente par exemple une longueur L₃₁, une largeur et une épaisseur *W*₃₁. La longueur du guide d'onde 31 est par exemple mesurée selon la première direction X. La largeur du guide d'onde 31 est par exemple mesurée selon la deuxième direction Y, perpendiculaire à la première direction X. L'épaisseur *W*₃₁ du guide d'onde 31 est par exemple mesurée selon la troisième direction Z, perpendiculaire au deux directions X, Y précitées.

La longueur *L*₃₁ du guide d'onde 31 peut être comprise entre 1000 µm et 5000 µm. Selon un mode de réalisation, la longueur *L*₃₁ et la largeur du guide d'onde 31 peuvent être égales, par exemple à 10% près. Ainsi, vu de dessus, la première face 31a peut présenter une forme carrée. Alternativement, la longueur *L*₃₁ du guide d'onde 31 peut être supérieure à la largeur du guide d'onde 31 et par exemple supérieure à deux fois la largeur du guide d'onde 31, voire supérieure à cent fois la largeur du guide d'onde. On parle dans ce cas de guide d'onde de type crête ou « ridge » en anglais. Par exemple, la largeur du guide d'onde 31 (non représentée sur la figure) peut être comprise entre 10 µm et 50 µm.

La région active 310 présente une longueur L₃₁₀, mesurée selon la première direction X, sensiblement égale à la longueur du *L*₃₁ du guide d'onde 31. De la même manière, la région active 310 présente une largeur, mesurée selon la deuxième direction Y, sensiblement égale à la largeur du guide d'onde 31. Par sensiblement égale, on entend égale à 20 % près, voire 10 % près. Des flancs, perpendiculaires au plan P délimitent par exemple le guide d'onde 31 et la région active 310.

Dans le mode de réalisation de la [Fig. 2], le réseau de diffraction 32 s'étend sur la première face 31a du guide d'onde 31 et en particulier sur le revêtement supérieur 311. La face émettrice 3b du dispositif 3 coïncide alors avec la deuxième face 31b du guide d'onde. Par coïncide, on entend que les faces sont coplanaires.

Le réseau de diffraction est avantageusement disposé à l'aplomb de la région active 310 du guide d'onde 31 et de manière préférée centrée par rapport à cette dernière.

Le réseau de diffraction 32 peut présenter une longueur *L*₃₂ et une largeur. La longueur *L*₃₂ du réseau de diffraction 32 est par exemple mesurée selon la première direction X. La largeur du réseau de diffraction 32 est par exemple mesurée selon la deuxième direction Y, perpendiculaire à la première direction X. La longueur *L*₃₂ et la largeur du réseau de diffraction 32 sont avantageusement choisie de sorte que le réseau de diffraction 32 recouvre totalement la région active 310. En d'autres termes, les longueurs et largeurs du réseau de diffraction 32 sont, respectivement, sensiblement égales aux longueurs et largeurs de la région active 310. De la sorte, le réseau de diffraction 32 peut être couplé de manière homogène au champ émis par la région active 310. Il permet par exemple de fournir une contreréaction répartie homogène sur toute la longueur *L*₃₁₀ de la région active 310.

Le dispositif 3 est remarquable d'une part en ce que la deuxième face 31b du guide d'onde est transparente au champ qui peut être émis par la région active 310. Par transparente, on entend que la face 31b présente une fenêtre spectrale de transmission et que cette fenêtre spectrale de transmission correspond à une partie au moins du spectre du champ qui peut être émis par la région active 310. La deuxième face 31b du guide d'onde 31 constitue d'ailleurs la face émettrice 3b du dispositif 3.

Le dispositif 3 est remarquable d'autre part en ce que le réseau de diffraction 32 est réfléchissant et en ce qu'il présente un ordre de diffraction, selon la première direction X, supérieur ou égal à deux. Par réfléchissant, on entend qu'au moins 50 % du champ est réfléchi par le réseau de diffraction 32. L'ordre de diffraction supérieur ou égal à deux selon la direction X implique que le champ généré par la région active se propageant selon la première direction X, se couple au réseau de diffraction 32 et induit une composante du champ qui se propage hors du plan P, c'est-à-dire selon +Z et/ou -Z. Puisque le réseau de diffraction 32 réfléchit la composante du champ se propageant selon +Z, ladite composante du champ est donc orientée vers la deuxième face 31b. Le dispositif 3 peut donc réaliser une émission par la deuxième face 31b. La deuxième face 31b du guide d'onde 31 coïncide donc avec la face émettrice 3b du dispositif 3.

Avantageusement, le réseau de diffraction 32 comprend une structure périodique 321. La structure périodique 321 est par exemple une couche s'étendant sur la première face 31a du guide d'onde 31. Couplée avec le champ émis par la région active 310, elle induit les effets de diffraction. Le taux de couplage entre le champ et le réseau de diffraction 32 est avantageusement compris entre 10 cm⁻¹ et 100 cm⁻¹.

La structure périodique 321 comprend par exemple des premières portions 3211 et des deuxièmes portions 3212. Ces premières et deuxièmes portions 3211, 3212 sont agencées périodiquement et forment une alternance selon la première direction X et selon la deuxième direction Y le cas échéant.

Par exemple, les premières et deuxièmes portions 3211, 3212 peuvent être des lignes, orientées selon la deuxième direction Y. Lesdites lignes sont agencées les unes à côtés des autres selon la première direction X de manière à former une alternance selon la première direction X. Autrement dit, elles forment deux peignes imbriqués l'un dans l'autre. La [Fig. 2] illustre cet exemple.

Selon un autre exemple, les premières portions 3211 sont des plots agencés selon un maillage rectangulaire. Par exemple, les deuxièmes portions 3212 sont des tores entourant chaque plot 3211 et remplissant l'espace entre les plots 3211. Selon une variante de cet exemple, les plots 3211 peuvent présenter une forme elliptique, présentant une grande longueur selon la première direction X et une petite longueur selon la deuxième direction Y ou inversement.

Les premières portions 3211 sont constituées d'un premier matériau semiconducteur présentant un premier indice optique. Le premier matériau semiconducteur est par exemple un matériau semiconducteur de type III-V, tel que l'InP. Il peut également s'agit du même matériau que le revêtement supérieur 311. Les deuxièmes portions 3212 sont constituées d'un deuxième matériau ou d'un métal. Le deuxième matériau peut être un autre matériau semiconducteur ou un gaz, tel que de l'air. Dans ce cas il présente un deuxième indice optique différent du premier indice optique.

Le réseau de diffraction 32 présente avantageusement, selon la première direction X, un ordre de diffraction unique. C'est-à-dire que la période *A* (ou « pas ») avec laquelle sont agencées les premières portions 3211 est constante sur toute la longueur *L*₃₂ du réseau 12. Les premières portions 3211 présentent alors avantageusement toutes une même largeur *A*₃₂₁₁, mesurée selon la première direction X. Les deuxièmes portions 3212, séparant les premières portions 3211, peuvent également présenter une même largeur *A*₃₂₁₂, également mesurée selon la première direction X. La période A d'agencement des premières portions 3211, qui correspond à la période du réseau de diffraction 32 selon la première direction X est donc égale à *A*₃₂₁₁ + *A*₃₂₁₂. Un ordre de diffraction unique signifie que la période A est constante, à +/- 10% près, sur toute la longueur *L*₃₂ du réseau de diffraction.

La région active 310 est préférentiellement configurée pour émettre dans la gamme infrarouge, c'est-à-dire dans une gamme [0,8 µm ; 20 µm] ou préférentiellement [4 µm ; 12 µm]. De telles longueurs d'onde impliquent une période *A* du réseau 12 de l'ordre du micromètre au moins. Un réseau de diffraction 32 applicable au spectre infrarouge est également plus simple à réaliser qu'un réseau présentant une période bien inférieure (par exemple dans le spectre bleu ou ultraviolet). D'autre part, ce type de gamme se prête avantageusement à la mesure ou la détection photoacoustique. De plus, une grande famille de matériaux semiconducteur est transparent au rayonnement infrarouge.

Le réseau de diffraction 32 comprend également une couche métallique 322 qui s'étend sur la structure périodique 321 et préférentiellement sur toute la structure périodique 321. Elle est par exemple constituée de Ti ou Au. L'effet réfléchissant du réseau de diffraction 32 peut d'ailleurs être fourni par la couche métallique 322 s'étendant sur la structure périodique 321. La couche métallique peut empêcher la transmission du champ à travers le réseau de diffraction 32. La couche métallique 12 s'étend notamment sur chaque première portion 3211 de la structure périodique 321. De la sorte elle empêche la transmission du champ à travers les premières portions 3211.

Le mode de réalisation de la [Fig. 2] illustre une couche métallique 322 continue et qui s'étend selon la première direction X. Alternativement la couche métallique 322 peut être discontinue et comprendre une pluralité de portions. Chaque portion s'étend donc avantageusement sur chaque première portion 3211 de la structure périodique 3211. Si par exemple les premières portions 3211 de la structure de la structure périodique 321 sont alignées selon la deuxième direction Y, alors la couche métallique 322 comprendra une pluralité de portions s'étendant également selon la deuxième direction Y, une portion de la couche métallique s'étendant sur une surface supérieure d'une première portion 3211.

La couche métallique 322 peut également s'étendre au-delà de la structure périodique 321 car elle peut également être utilisée en tant qu'électrode de contact du dispositif 3. Elle peut permettre d'appliquer un champ électrique de manière uniforme sur la région active 310 afin d'injecter des porteurs dans la région active 310. Les porteurs peuvent se désexciter en émettant des photons dans la région active 310.

La couche métallique 322 permet également d'améliorer le confinement du champ dans le guide d'onde 31 grâce à l'interaction plasmonique du champ avec le métal.

Selon une variante, le réseau de diffraction 32 peut être configuré de sorte qu'il présente, selon la deuxième direction Y, perpendiculaire à la première direction X, un ordre supérieur ou égal à deux également. Ainsi le champ se propageant selon la deuxième direction Y, se couple également au réseau de diffraction et induit une composante du champ qui se propage également hors du plan P, c'est-à-dire selon +Z et/ou -Z. Cette variante peut être obtenue lorsque les premières portions 3211 de la structure périodique 321 sont des plots agencés selon un maillage rectangulaire. Cette variante est avantageuse lorsque la largeur et la longueur de la région active (et donc du réseau de diffraction) sont sensiblement égales, par exemple à 20 % près. En revanche, si la longueur de la région active 310 est très supérieure à sa largeur, par exemple 20 fois supérieure à sa largeur (guide de type « ridge »), il est préférable que le réseau de diffraction 32 ne présente un ordre que selon la première direction X et aucun ordre selon la deuxième direction Y. En d'autres termes, les premières portions 3211 de la structure périodique 321 peuvent être des lignes alignées selon la deuxième direction Y et réparties selon la première direction X.

S'il y a lieu, le réseau de diffraction 32 peut également présenter, selon la deuxième direction Y, un ordre de diffraction unique. Les périodes d'agencement des premières et deuxièmes portions selon les premières et deuxièmes directions X et Y sont alors constantes dans les deux directions. Elles peuvent toutefois être différentes, de sorte que l'ordre selon la première direction X soit différent de l'ordre selon la deuxième direction Y.

Le confinement latéral du champ peut également être apportés par des revêtements conducteurs s'étendant sur les flancs du guide d'onde 31. Le guide d'onde 31 est, par exemple, délimité par un premier flanc et un deuxième flanc, opposés l'un à l'autre. Les premier et deuxième flancs sont par exemple sensiblement perpendiculaires à la deuxième direction Y. On parle alors de « flancs latéraux » ou « facettes latérales ». Le dispositif 3 comprend des première et deuxième couches conductrices qui s'étendent respectivement sur les premier et deuxième flancs. Les couches conductrices sont par exemple des couches métalliques en Ti ou Au, s'étendant perpendiculairement au plan P. Elles forment une cavité selon la deuxième direction Y de propagation et permettent de confiner le champ selon la deuxième direction Y.

Afin d'éviter un court-circuit au sein du guide d'onde (par exemple un court-circuit du revêtement supérieur 311 avec le revêtement inférieur 312), le dispositif 3 comprend avantageusement des espaceurs électriquement isolant. Il s'agit par exemple de couches diélectriques. Chaque espaceur est par exemple disposé sur les flancs latéraux, entre les couches conductrices et les flancs latéraux.

Le dispositif 3 peut également comprendre des troisième et quatrième couches conductrices permettant de contribuer au confinement du champ selon la première direction. Elles s'étendent par exemple sur, respectivement, un troisième et quatrième flancs, délimitant le guide d'onde 31 selon la première direction X. Les troisième et quatrième flancs peuvent être appelés « facette avant » et « facette arrière ». Les troisième et quatrième flancs sont par exemple perpendiculaires à la première direction X. Les espaceurs sont alors avantageusement disposés sur les troisième et quatrième flancs, entre les troisième et quatrième couches conductrices et les troisième et quatrième flancs de manière à éviter tout court-circuit.

Dans un mode de réalisation alternatif du dispositif 3, le réseau de diffraction 32 ne s'étend pas sur la première face 31a du guide d'onde 31. Il s'étend sur la deuxième face 31b du guide d'onde 31. Il s'agit en l'occurrence de la face du guide d'onde 31 qui est orientée vers la fenêtre 22a du système photoacoustique 1. En d'autres termes, le réseau de diffraction 32 coïncide avec la face émettrice 3b du dispositif 3. Le réseau de diffraction 32 est, par exemple, localisé entre le dispositif 3 et la fenêtre 22a. Afin de permettre la propagation du champ vers la fenêtre 22a, le réseau de diffraction 32 est non-réfléchissant. Autrement dit, il transmet une partie de la puissance véhiculée par le champ électromagnétique.

Le réseau de diffraction 32 peut comprendre une structure périodique 321 telle que décrite précédemment. En revanche, cette structure périodique s'étend sur la deuxième face 31b du guide d'onde 31, par exemple sur le revêtement inférieur 312. Le dispositif 3 peut également comprendre une couche métallique. Toutefois la couche métallique ne s'étend pas sur la structure périodique 321, au risque de bloquer la transmission du champ. La couche métallique peut toutefois s'étendre sur la première face 31a du guide d'onde 31. De la sorte, elle réfléchit le champ se propageant vers la première face 31a et permet d'augmenter la puissance traversant la structure périodique 321 sur la deuxième face 31b.

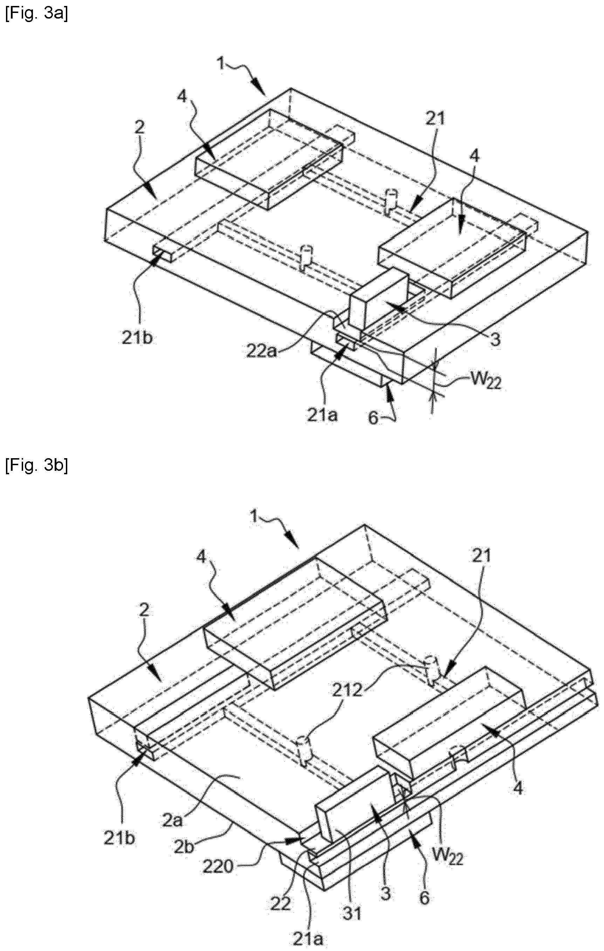

Les [Fig. 3a] et [Fig. 3b] montrent un mode réalisation du système 1. Ce mode de réalisation diffère du mode illustré par les [Fig. 1a] et [Fig. 1b] en ce que la fenêtre 22 présente une épaisseur *W*₂₂, mesurée selon la direction Z, inférieure à 50 µm, en l'occurrence 10 µm. Pour cela, une tranchée 220 est pratiquée dans le substrat 2, à partir de la surface supérieure 2a du substrat 2, de manière à affiner l'épaisseur W₂₂ de la fenêtre 22. Ainsi, la transmission du rayonnement issu du dispositif 3 est augmentée.

De manière applicable aux modes de réalisation des [Fig. 1a], [Fig. 1b], [Fig. 3a] et [Fig. 3b], le dispositif 3 peut être collé sur la fenêtre afin d'améliorer le couplage et éviter l'utilisation d'une couche anti-reflet. Le collage est par exemple réalisé au niveau moléculaire (dit plus couramment « collage moléculaire » ou « collage intime »). Il peut également être réalisé au moyen d'une colle polymérisable, par exemple à base d'époxy. La colle est préférentiellement polymérisable sous l'action d'un rayonnement UV, afin de rester passive au rayonnement infrarouge.

Dans le mode de réalisation des [Fig. 3a] et [Fig. 3b], le système 1 comprend également un régulateur thermique 6 configuré pour réguler la température du dispositif 3. Le régulateur thermique 6 est par exemple une cellule Peltier. Une source froide du régulateur thermique 6 est le dispositif 3 à émission de surface et une source chaude du régulateur thermique 6 est un bain thermique (tel qu'un dissipateur à ailettes en contact avec le milieu ambiant). Dans ce mode de réalisation, le régulateur thermique 6 est disposé sous le substrat 2 et en contact direct avec la face inférieure 2b de ce dernier. Plus particulièrement, le régulateur 6 est disposé à l'aplomb du dispositif 3 à réguler. Le substrat 2 sert alors de pont thermique entre le dispositif 3 et le régulateur thermique 6. En l'occurrence, dans cet exemple, ce sont les portions du substrat 2 jouxtant la cavité 21a qui jouent le rôle de pont thermique entre le dispositif 3 et le régulateur 6. En effet, le substrat 2, qui peut être en Si, présente une conductivité thermique comprise entre 60 W/m/K et 150 W/m/K, ce qui permet de transférer efficacement la chaleur du dispositif 3 vers le régulateur thermique 6.

Le dispositif 3 à émission de surface est avantageusement configuré pour que le rayonnement électromagnétique (dit également « faisceau » ou « pinceau ») soit émis selon une direction sensiblement normale par rapport à la face émettrice 3b. En d'autres termes, le rayonnement présente par exemple un angle, mesuré par rapport à la normale de ladite face émettrice 3b, qui est compris entre 0° et 60°. Cet angle peut également être compris entre 0° et 20°. Ainsi, c'est une partie du résonateur 21 sensiblement à l'aplomb de la face émettrice 3b qui peut être illuminé par le faisceau. L'angle d'émission peut être contrôlé en modifiant légèrement le pas du réseau de diffraction 32.

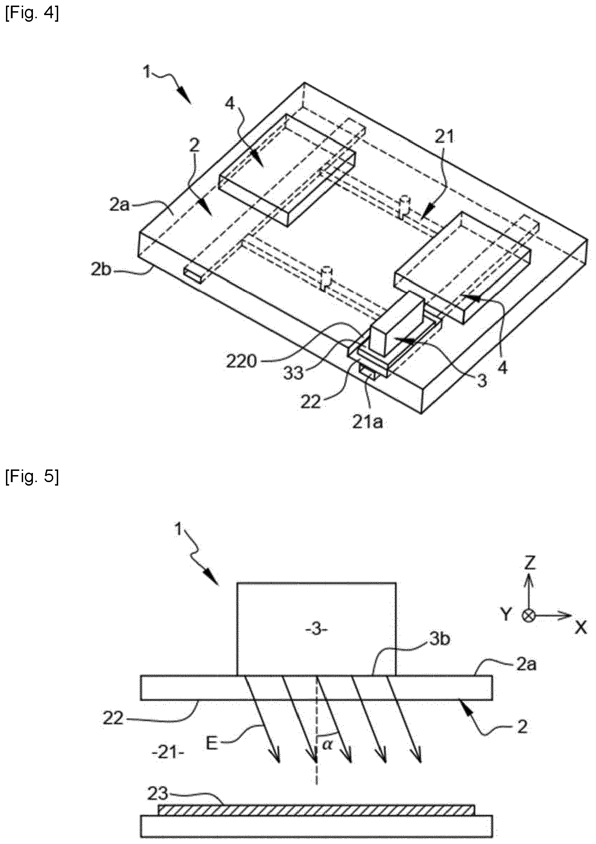

La [Fig. 4] montre un mode de réalisation du système 1 qui diffère du mode de réalisation des [Fig. 3a] et [Fig. 3b] en ce que le dispositif 3 comprend une couche semiconductrice supplémentaire 33 dite « semelle optique ». La semelle optique 33 s'étend entre la fenêtre 22 et la face émettrice 3b du dispositif 3, autrement dit, entre la fenêtre 22 et la deuxième face 31b du guide d'onde 31 dudit dispositif 3. Dans ce mode de réalisation, la semelle 33 repose au fond de la tranchée 220. Ainsi, la surépaisseur créée par la semelle 33 est compensée. La semelle optique 33 peut permettre d'adapter l'indice optique du guide d'onde 31 à celui de la fenêtre 22.

Afin d'améliorer la régulation, le régulateur thermique 6 peut être disposé sur la face supérieure 2a du substrat 2, par exemple à proximité du dispositif 3, voire en contact direct avec le dispositif 3.

Le régulateur thermique 6 est avantageusement configuré pour réguler la température du dispositif 3 à émission de surface. Par exemple, le régulateur thermique 6 est configuré pour réguler la température dudit dispositif 3 à 0,1 °C près lorsque ce dernier fonctionne en régime stationnaire. On peut inclure le fonctionnement modulé du dispositif 3 dans le régime stationnaire. En effet, dans le cadre d'une mesure photoacoustique, la stimulation d'une molécule ou d'un milieu est réalisée avec une fréquence acoustique (par exemple comprise en 20 Hz et 20 kHz). Le fonctionnement du dispositif 3 est donc modulé (par exemple allumé/éteint périodiquement) selon cette fréquence acoustique.

Alternativement, que le dispositif soit en régime stationnaire ou transitoire, le régulateur thermique 6 peut être configuré pour réguler la température dudit dispositif 3 de sorte que la variation temporelle de la température dudit dispositif soit inférieure à 0,1 °C/s.

La [Fig. 5] montre, dans une coupe selon un plan {X ; Z}, un mode de réalisation du système 1 dans lequel le faisceau E (flèches noires) est émis avec une inclinaison par rapport à la normale à la surface émettrice 3b. Le faisceau E est ainsi injecté dans la cavité principale 21a du résonateur 21 qui n'est pas à l'aplomb du dispositif 3. Le dispositif 3 est par exemple avantageusement configuré pour émettre le rayonnement E avec un angle α, mesuré par rapport à la normale de ladite face émettrice 3b, compris entre 30° et 60°. Ainsi, les réflexions du rayonnement E contre la paroi interne délimitant la cavité 21a peuvent permettre au rayonnement E de se propager dans toute la cavité 21a.

Afin de réduire l'absorption du faisceau E dans le substrat 2, le résonateur 21 peut présenter une surface métallique 23 qui est disposé sur le chemin optique du rayonnement E afin de favoriser les réflexions du faisceau E dans le résonateur 21. Par exemple, la surface métallique 23 est disposée sur une portion de la paroi interne délimitant la cavité principale 21a et orientée vers la face émettrice 3b du dispositif 3 (la convention d'orientation de la paroi interne étant définie comme orientée du substrat 2 vers la cavité 21a). Avantageusement, la surface métallique 23 est disposée sur toute la paroi interne délimitant la cavité 21a, à l'exception de la portion en contact avec la fenêtre 22. De cette manière, le rayonnement électromagnétique peut pénétrer dans le résonateur 21 sans encombre et illuminer une grande partie du volume de la cavité 21a grâce aux multiples réflexions.

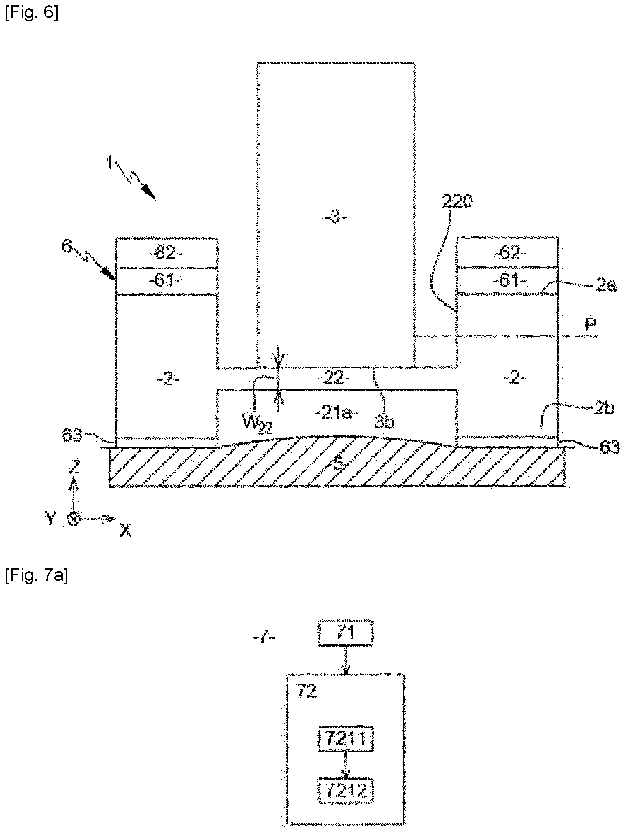

La [Fig. 6] représente schématiquement un mode de réalisation du système 1 permettant de réaliser une mesure photoacoustique d'un échantillon 3. L'échantillon 5 est par exemple un échantillon de peau vascularisé. Le système 1 est configuré pour illuminer une portion de l'échantillon et induire une excitation d'une espèce ciblée dans l'échantillon, tel que le glucose dans les vaisseaux sanguins parcourant l'échantillon 5. La réponse photoacoustique du glucose peut induire une vibration de la surface de l'échantillon 5 qui, couplé à une cavité 21a, peut être captée grâce à des capteurs sonores 4 (non représentés).

À la différence des modes de réalisation exposés ci-dessus, dans ce mode de réalisation le substrat 2 comprend un volume creux 21a qui est débouchant. C'est-à-dire ouvert sur la face inférieure 2b du substrat 2. Ce volume creux 21a, une fois plaqué contre l'échantillon 5, forme une cavité fermée dans laquelle une onde sonore peut se propager.

Le dispositif 3 repose sur la fenêtre 22. L'épaisseur W₂₂ de la fenêtre 22 est réduite, par exemple inférieure ou égale à 50 µm, grâce à la tranchée 220 pratiquée dans le substrat 2, à partir de la surface supérieure 2a.

Dans ce mode de réalisation, le système 1 comprend également un régulateur thermique 6, configuré pour réguler la température du dispositif 3 en fonctionnement et préférentiellement en un régime stationnaire. Le mode de réalisation de la [Fig. 6] montre que le régulateur thermique 6 comprend des cellules actives 61, telles que des cellules Peltier, et un dissipateur thermique 62, tel qu'un dissipateur à ailettes. Les cellules 61 sont par exemple en contact avec le substrat 2, dès lors que le transfert thermique offert par ce dernier est suffisant. S'il est par exemple réalisé en Si, il offre un coefficient de transfert thermique d'environ 150 W/m/K, ce qui peut être suffisant lorsque quelques millimètres séparent les cellules 61 et le dispositif 3. Le dissipateur 62 est en contact avec les cellules 61 de manière à dissiper la chaleur pompée à partir du substrat 2. Des isolants thermiques 63 peuvent être ajoutés entre le substrat 2 et l'échantillon 5 pour éviter que l'échantillon 5 ne chauffe le dispositif 3 ou inversement.

Dans une variante, les cellules 61 peuvent être disposées contre le substrat 2, en lieu et place des isolants thermiques 63. Dans ce cas-là, l'échantillon 5 peut faire office de dissipateur thermique. Le régulateur thermique 61 ne comprend alors plus que les cellules 61.

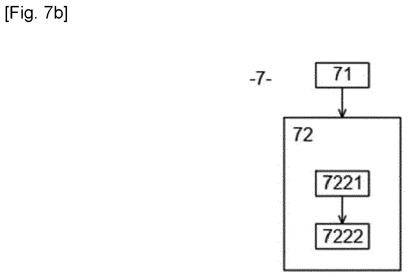

Les [Fig. 7a] et [Fig. 7b] montrent schématiquement deux modes de mise en oeuvre d'un procédé 7 de fabrication d'un système 1 selon l'invention.

De manière transverse aux deux modes de mise en oeuvre illustrés, le procédé 7 comprend une étape de fourniture 71 d'un substrat 2 comprenant une face 2a supérieure et au moins une fenêtre 22 associée à un volume creux 21a (pouvant faire partie d'un résonateur 21 ou pouvant être débouchant). Le volume creux 21a (ou le résonateur 21) peut être formé tel que décrite plus haut, en gravant par exemple un réseau de tranchées à la surface de deux substrats fins 2', 2" qui, une fois collés l'un contre l'autre, forment le substrat 2 et permettent de former le volume creux 21a (ou le résonateur 21). La paroi est formée de sorte que le volume creux 21a s'étende dans le substrat 2 sous la face supérieure du substrat 2 et qu'au moins une fenêtre 22 telle que définie précédemment, s'étende à l'aplomb d'au moins une partie du volume creux 21a.

Le procédé 7 comprend également une étape de fabrication 72 du dispositif 3 à émission de surface sur la fenêtre 22. La fabrication est réalisée de sorte que la face émettrice 3b du dispositif 3 repose sur la fenêtre 22.

Dans le mode de mise en oeuvre de la [Fig. 7a], la fabrication 72 du dispositif 3 comprend une sous-étape de formation 7211 du guide d'onde 31 sur la fenêtre 22. Le guide d'onde 31 est par exemple formé sur un substrat différent et ensuite collé sur la fenêtre 22. Alternativement, les couches composant le guide d'onde 31 peuvent être déposées les unes après les autres à partir de la fenêtre 22. Par exemple, la formation 7211 du guide d'onde 31 peut comprendre dans un premier temps une étape de collage moléculaire d'une première couche semiconductrice, par exemple en InP, sur la face supérieure 2a du substrat 2, par exemple en Si. Un empilement de sous-couches semiconductrices peut ensuite être formé sur ladite première couche semiconductrice en InP pour permettre de former la région active 310. Une deuxième couche semiconductrice, par exemple en InP, est formé sur l'empilement de sous-couches semiconductrices. Enfin, une gravure des première et deuxième couches semiconductrices en InP et de l'empilement de sous-couches semiconductrices permet de former le guide d'onde 31.

Dans ce mode de mise en oeuvre, la fabrication 72 comprend également une étape de formation 7212 du réseau de diffraction 32 sur le guide d'onde 31. Le réseau de diffraction 32 peut être formé 7212 sur le guide d'onde 31 lorsque celui-ci est formé sur un substrat différent que le substrat 2. Ainsi, l'ensemble formant le dispositif 3 est découpé et déposé (et collé) sur la fenêtre 22. De manière alternative, lorsque les couches composant le guide d'onde 31 sont déposés sur la fenêtre 22, le réseau 32 peut être formé par le dépôt d'une couche métallique sur la deuxième couches semiconductrice en InP. Une première gravure de la couche métallique permet de former le réseau de diffraction 32. Une seconde gravure, plus profonde, permet de délimiter le pourtour du réseau de diffraction 32 et du guide d'onde 31, formant ainsi le dispositif 3.

Dans le mode de mise en oeuvre de la [Fig. 7b], la fabrication 72 du dispositif 3 comprend d'abord une étape de formation 7221 du réseau de diffraction 32. Le réseau de diffraction 32 est par exemple formé sur un substrat différent puis reporté sur la fenêtre 22. De manière avantageuse, le réseau de diffraction 32 est réalisé directement sur la fenêtre 22. Par exemple, une couche métallique est déposée sur la fenêtre 22 et gravée de manière à former le réseau 32. De manière alternative, un réseau de tranchées parallèles peut être gravé dans la fenêtre 22 et rempli d'un matériau métallique ou semiconducteur (mais, dans ce dernier cas, différent du matériau semiconducteur de la fenêtre 22).

Dans ce mode de mise en oeuvre, la fabrication 72 du dispositif 3 comprend ensuite la formation 7222 du guide d'onde 31 sur le réseau de diffraction 32. Le guide d'onde 31 est par exemple formé sur un substrat différent puis reporté sur la fenêtre 22 et le réseau 32. Alternativement, les couches composant le guide d'onde 31 peuvent être déposée directement sur le réseau 32. Par exemple, la formation 7222 du guide d'onde 31 comprend une étape de collage moléculaire d'une première couche semiconductrice, par exemple en InP, sur la face supérieure 2a du substrat 2 et donc sur le réseau de diffraction 32. Ensuite, un empilement de sous-couches semiconductrices est formé sur ladite première couche semiconductrice en InP pour permettre de former la région active 310. Une deuxième couche semiconductrice, par exemple en InP, est formé sur l'empilement de sous-couches semiconductrices. Enfin, une gravure des première et deuxième couches semiconductrices en InP et de l'empilement de sous-couches semiconductrices permet de délimiter le guide d'onde 31, à l'aplomb du réseau 32.

Lorsque les modes de mise en oeuvre des [Fig. 7a] et [Fig. 7b] prévoit le report du guide d'onde 3 sur la fenêtre 22 ou sur le réseau 32, le guide d'onde 3 peut être collé. Soit par collage moléculaire, soit au moyen d'une colle polymérisable. Dans ce dernier cas, une portion de colle est déposée sur la fenêtre 22 (ou le réseau de diffraction 32) et le dispositif 3 est ensuite déposé et pressé contre cette portion de colle.

## Revendications

1. Système (1) photoacoustique comprenant : un substrat (2) semiconducteur, le substrat (2) semiconducteur comprenant : une face (2a) dite « face supérieure » ; et une paroi interne délimitant un volume creux (21a), le volume creux (21a) s'étendant dans le substrat (2) semiconducteur à distance de la face (2a) supérieure dudit substrat (2) semiconducteur,
le système (1) photoacoustique étant **caractérisé en ce que** :
- le substrat (2) semiconducteur comprend au moins une portion (22a), dite « fenêtre », transparente à un champ électromagnétique, s'étendant à l'aplomb d'au moins une partie du volume creux (21a) et depuis la face (2a) supérieure du substrat (2) semiconducteur jusqu'au volume creux (21a) ; et **en ce que**
- le système (1) photoacoustique comprend au moins un dispositif (3) à émission de surface comprenant une face émettrice (3b), ladite face émettrice (3b) s'étendant sur ladite au moins une fenêtre (22a), ledit au moins un dispositif comprenant :
- un guide d'onde (31) comprenant une première face (31a) et une deuxième face (31b), opposée à la première face, le guide d'onde comprenant une région active (310) configurée pour émettre le champ électromagnétique ; et
- un réseau de diffraction (32) présentant, selon une première direction (X) parallèle à la face émettrice (3b) dudit dispositif (3), un ordre de diffraction supérieur ou égal à deux,
- ledit réseau de diffraction (32) s'étendant sur la première face (31a) du guide d'onde (31), la face émettrice (3b) coïncidant avec la deuxième face (31b) du guide d'onde (31) ; ou ledit réseau de diffraction (32) s'étendant sur la deuxième face (31b) du guide d'onde (31), la face émettrice (3b) coïncidant avec le réseau de diffraction (32).

2. Système (1) selon la revendication 1, **caractérisé en ce que** le réseau de diffraction (32) dudit au moins un dispositif (3) s'étend sur la première face (31a) du guide d'onde (31) dudit au moins un dispositif (3) et **en ce que** ledit réseau de diffraction (32) est réfléchissant.

3. Système (1) selon la revendication précédente, **caractérisé en ce que** le réseau de diffraction (32) dudit au moins un dispositif (3) comprend une structure périodique (321) et une couche métallique (322), la structure périodique (321) s'étendant sur la première face (31a) du guide d'onde (31) et la couche métallique (322) s'étendant sur la structure périodique (321).

4. Système (1) selon la revendication 1, **caractérisé en ce que** le réseau de diffraction (32) dudit au moins un dispositif (3) s'étend sur la deuxième face (31b) du guide d'onde (31) dudit au moins un dispositif (3) et **en ce que** ledit réseau de diffraction (32) est non-réfléchissant.

5. Système (1) selon l'une des revendications précédentes, **caractérisé en ce que** le réseau de diffraction (32) dudit au moins un dispositif (3) s'étend à l'aplomb de la région active (310) du guide d'onde (31) dudit au moins un dispositif (3), la région active (310) présentant une longueur, mesurée selon la première direction (X), et le réseau de diffraction dudit au moins un dispositif (3) présentant une longueur, également mesurée selon la première direction, la longueur dudit réseau de diffraction étant sensiblement égale à la longueur de ladite région active, ledit réseau présentant, selon la première direction, un ordre de diffraction unique.

6. Système (1) selon la revendication précédente, **caractérisé en ce que** le réseau de diffraction dudit au moins un dispositif (3) présente, selon la première direction, un ordre de diffraction supérieur ou égal à trois.

7. Système (1) selon l'une des revendications précédentes, **caractérisé en ce que** la région active (310) dudit au moins un dispositif (3) présente une largeur, mesurée selon une deuxième direction (Y), parallèle à la face émettrice (3b) dudit au moins une dispositif (3) et perpendiculaire à la première direction (X), et le réseau de diffraction (32) dudit au moins un dispositif (3) présente une largeur, mesurée selon la deuxième direction (Y), la largeur dudit réseau de diffraction (32) étant sensiblement égale à la largeur de ladite région active (310), ledit réseau de diffraction (32) présentant, selon la deuxième direction (Y), un autre ordre de diffraction, unique et supérieur ou égal à deux.

8. Système (1) selon l'une des revendications précédentes, **caractérisé en ce que** le guide d'onde dudit au moins un dispositif (3) est délimité par un premier flanc et un deuxième flanc, le deuxième flanc étant opposé au premier flanc, les premier et deuxième flancs étant sensiblement perpendiculaires à la deuxième face (31b), ledit dispositif comprenant également une première couche conductrice et une deuxième couche conductrice, la première couches conductrice s'étendant sur le première flanc et la deuxième couche conductrice s'étendant sur le deuxième flanc.

9. Système (1) photoacoustique selon l'une revendications précédentes, **caractérisé en ce que** ledit au moins un dispositif (3) à émission de surface est collé sur la fenêtre (22) et préférentiellement par collage moléculaire ou au moyen d'une colle polymérisable.

10. Système (1) photoacoustique selon l'une des revendications précédentes, **caractérisé en ce que** ledit au moins un dispositif (3) à émission de surface est configuré pour émettre le rayonnement électromagnétique infra-rouge par sa face émettrice (3b) avec un angle (α), mesuré par rapport à la normale de ladite face (3b) émettrice, compris entre 0° et 60°.

11. Système (1) photoacoustique selon l'une des revendications précédentes, **caractérisé en ce que** le substrat (2) semiconducteur comprend une pluralité de fenêtres et le système photoacoustique (1) comprend une pluralité de dispositifs à émission de surface, chaque dispositif à émission de surface de la pluralité de dispositifs à émission de surface étant disposé sur une fenêtre de la pluralité de fenêtres.

12. Système (1) photoacoustique selon l'une des revendications précédentes, **caractérisé en ce que** le rayonnement électromagnétique comprend une longueur d'onde comprise dans [0,8 µm ; 20 µm].

13. Système (1) photoacoustique selon l'une des revendications précédentes, **caractérisé en ce que** le système (1) photoacoustique comprend un régulateur thermique (4) configuré pour réguler la température dudit au moins un dispositif (3) à émission de surface.

14. Procédé (7) de fabrication d'un système (1) photoacoustique comprenant, à partir d'un substrat (2) semiconducteur comprenant une face (2a) dite « face supérieure » :
- former (71) une paroi interne délimitant un volume (21a) creux, le volume creux (21a) s'étendant dans le substrat (2) semiconducteur à distance de la face (2a) supérieure dudit substrat (2) semiconducteur de sorte que le substrat (2) semiconducteur comprenne au moins une portion (22a), dite « fenêtre », transparente à un champ électromagnétique, s'étendant à l'aplomb d'au moins une partie du volume creux (21a) et depuis la face (2a) supérieure du substrat (2) semiconducteur jusqu'au volume creux (21a) ;
- fabriquer (72) au moins un dispositif (3) à émission de surface s'étendant sur la fenêtre (22a), ledit au moins un dispositif comprenant :
- un guide d'onde (31) comprenant une première face (31a) et une deuxième face (31b), opposée à la première face, la deuxième face (31b) reposant sur ladite au moins une fenêtre (22a), le guide d'onde comprenant une région active (310) parallèle à la deuxième face (31b) configurée pour émettre le champ électromagnétique ; et
- un réseau de diffraction (32) présentant un ordre de diffraction supérieure ou égal à deux et s'étendant sur la première face (31a) du guide d'onde (31) ou sur la deuxième face (31b) du guide d'onde (31).

15. Procédé de fabrication selon la revendication 14, dans lequel la fabrication (72) dudit au moins un dispositif (3) à émission de surface comprend :
- former (7211) le guide d'onde (31) dudit au moins un dispositif (3) sur ladite au moins une fenêtre (22) du substrat (2) semiconducteur ; et
- former (7212) le réseau de diffraction (32) dudit au moins un dispositif (3) sur la première face (31a) dudit guide d'onde (31).

16. Procédé de fabrication selon la revendication 14, dans lequel la fabrication (72) dudit au moins un dispositif (3) à émission de surface comprend :
- former (7221) le réseau de diffraction (32) dudit au moins un dispositif (3) sur ladite au moins une fenêtre (22) du substrat (2) semiconducteur ; et
- former (7222) le guide d'onde (31) dudit au moins un dispositif (3) sur ledit réseau de diffraction (32).
